# EUROPÄISCHE PATENTSCHRIFT

(11) **EP 2 790 945 B1**
(45) Veröffentlichungstag und Bekanntmachung des Hinweises auf die Patenterteilung: **09.09.2015**
(21) Anmeldenummer: 12772953.1
(22) Anmeldetag: 16.10.2012
(51) Int. Cl.: B60K 26/02

(54) **VERFAHREN UND STEUERGERÄT ZUM STEUERN EINES IN SCHWINGUNGEN ZU VERSETZENDEN HAPTISCHEN FAHRPEDALS IN EINEM KRAFTFAHRZEUG**
METHOD AND CONTROL DEVICE FOR CONTROLLING A HAPTIC ACCELERATION PEDAL THAT IS TO BE SET IN OSCILLATION IN A MOTOR VEHICLE
PROCÉDÉ ET DISPOSITIF DE COMMANDE POUR COMMANDER UNE PÉDALE D'ACCÉLÉRATEUR HAPTIQUE À METTRE EN OSCILLATION DANS UN VÉHICULE À MOTEUR

(30) Priorität: 12.12.2011 DE 102011088316
(43) Veröffentlichungstag der Anmeldung: 22.10.2014
(73) Patentinhaber: Robert Bosch GmbH, 70442 Stuttgart (DE)
(72) Erfinder: SIEBER, Udo, 74321 Bietigheim (DE); DEISSLER, Markus, 74172 Neckarsulm (DE); HENNING, Dianiel, 74372 Sersheim (DE)
(86) Internationale Anmeldenummer: PCT/EP2012/070493
(87) Internationale Veröffentlichungsnummer: WO 2013/087261

(56) Entgegenhaltungen:
- WO-A1-2010/130605
- DE-A1- 10 026 048
- JP-A- 2007 204 012
- US-A1- 2011 260 557

## Beschreibung

### Gebiet der Erfindung

Die vorliegende Erfindung betrifft ein Verfahren sowie ein Steuergerät zum Steuern eines haptischen Fahrpedals in einem Kraftfahrzeug, wobei das Fahrpedal mit Hilfe eines Aktuators in Schwingungen versetzt werden soll. Die Erfindung betrifft ferner ein Computerprogrammprodukt, das bei Ausführung auf einem programmierbaren Steuergerät das erfindungsgemäße Verfahren ausführen soll, sowie ein computerlesbares Medium, auf dem ein solches Computerprogrammprodukt gespeichert ist.

### Stand der Technik

In modernen Kraftfahrzeugen wird der Fahrer durch eine Vielzahl von zur Verfügung gestellten Informationen beim Führen des Fahrzeugs unterstützt. Beispielsweise kann es hilfreich sein, dem Fahrer Rückmeldungen über bestimmte Fahrzustände in Form von Signalen zu geben, um die Sicherheit beim Fahren oder den Komfort des Fahrers erhöhen zu können oder um Treibstoff einsparen zu können. Diese Rückmeldungen können auf verschiedene Weise wie zum Beispiel optisch oder akustisch bereitgestellt werden.

In modernen Fahrzeugen werden zusätzlich auch Möglichkeiten der haptischen Rückmeldung an den Fahrer über das Fahrpedal des Fahrzeugs implementiert. Das Fahrpedal ist hierzu mit einem Aktuator ausgestattet, der es ermöglicht, das Fahrpedal gezielt mit einer Kraft zu beaufschlagen. Beispielsweise kann das Fahrpedal während einer Signalphase mit Hilfe einer von dem Aktuator erzeugten variierenden Kraft in Schwingungen versetzt werden, die von dem Fahrer als Vibrationen oder Pulsationen über seinen auf dem Fahrpedal ruhenden Fuß haptisch wahrgenommen werden können. Auf diese Weise können dem Fahrer durch dessen haptische Wahrnehmung Hinweise und Warnungen mitgeteilt oder auch Komfortfunktionen bereitgestellt werden, ohne dass dieser durch optische oder akustische Signale beispielsweise vom Beobachten des Verkehrs abgelenkt würde.

Ein gattungsgemäßes Verfahren ist aus JP 2007 204612 bekannt.

### Offenbarung der Erfindung

Die vorliegende Erfindung ermöglicht in ihren Ausführungsformen ein vorteilhaftes Ansteuern eines haptischen Fahrpedals in einem Kraftfahrzeug. Dabei kann beispielsweise die Qualität oder Identifizierbarkeit eines von dem Fahrpedal erzeugten, haptisch wahrnehmbaren Schwingungssignals erhöht werden. Außerdem können die bei der Erzeugung eines solchen Schwingungssignals generierten Geräusche reduziert werden.

Bei dem vorgeschlagenen Verfahren zum Steuern eines haptischen Fahrpedals wird das Fahrpedal während einer Signalphase mittels einer von einem Aktuator erzeugten variierenden Betätigungskraft in Schwingungen versetzt. Der Aktuator wird dabei dazu angesteuert, das Fahrpedal während der gesamten Signalphase wenigstens mit einer Mindestkraft zu beaufschlagen.

Dem erfindungsgemäßen Ansteuerungsverfahren zugrunde liegende Motivationen bzw. Ideen können unter anderem darin gesehen werden, dass haptische Fahrpedale in Kraftfahrzeugen mit Hilfe möglichst einfacher und kostengünstiger Aktuatoren betätigt werden sollen und andererseits ein von einem Aktuator erzeugtes Schwingungssignal von einem Fahrer deutlich wahrgenommen werden soll. Dabei sollen außerdem die entstehenden Geräusche minimiert werden.

Bei bisherigen haptischen Fahrpedalen ist häufig eine Mechanik zum Einkoppeln einer haptischen Rückmeldung vorgesehen, wobei ein Antrieb und eine Einkopplung sehr aufwendig gestaltet sein können. Beispielsweise kann für den Aktuator ein Torquer-Motor bzw. ein aufwendiger Direktantrieb vorgesehen sein. Nachteile dieser Technik sind ein großer benötigter Bauraum, hohe Stromaufnahme, hohes Gewicht und hohe Kosten.

Es kann daher gewünscht sein, solche Aktuatoren durch einfachere Aktuatoren, basierend auf einem Gleichstrommotor und eventuell einem damit verbundenen Getriebe, zu ersetzen. Der Gleichstrommotor kann dabei klein gebaut sein und in der Regel auf schwere Magnete aus teuren Materialien wie zum Beispiel seltenen Erden verzichten. Ein für die Betätigung des haptischen Fahrpedals nötiges hohes Drehmoment kann der Gleichstrommotor mit Hilfe eines angekoppelten Getriebes erzeugen.

Beim Verwenden von Aktuatoren, die ein Getriebe beinhalten, wurde jedoch erkannt, dass es vorteilhaft sein kann, beim Aufprägen von Schwingungen auf das haptische Fahrpedal, beispielsweise in Form von Vibrationen oder n-fachen Pulsen, die von dem Aktuator auf das Fahrpedal erzeugte, zeitlich variierende Betätigungskraft während einer Signalphase nicht zeitweilig zu unterbrechen und insbesondere nicht in ihrer Wirkungsrichtung umzukehren.

Stattdessen soll das Fahrpedal während der gesamten Signalphase, während der Schwingungen in dem Fahrpedal erzeugt werden sollen, wenigstens mit einer Mindestkraft von beispielsweise mindestens einem 1 N, vorzugsweise mindestens 5 N und stärker bevorzugt mindestens 10 N, beaufschlagt werden. Die Mindestkraft kann beispielsweise zwischen einem und 30 Prozent, vorzugsweise zwischen zwei und zehn Prozent, der durchschnittlich von dem Aktuator während der Signalphase erzeugten Kraft betragen.

Dieser Erkenntnis liegt die folgende Beobachtung zugrunde: Beim Aufprägen von Schwingungen auf ein haptisches Fahrpedal beispielsweise in Form von sinusartigen Einzelschwingungen oder in Form von n-fach-Klick-Pulsen oder Vibrationspulsen wurde bisher die auf das haptische Fahrpedal ausgeübte Betätigungskraft derart erzeugt, dass im Minimum einer Schwingung im Wesentlichen keine Kraft, das heißt etwa 0 N, von dem Aktuator auf das Fahrpedal ausgeübt wurde oder die Kraftrichtung sogar während der Schwingung umgekehrt wurde.

Insbesondere bei der Verwendung von Aktuatoren mit einem Getriebe kann es hierbei jedoch zu unerwünschten Effekten kommen. Beispielsweise kann es bei fehlender Kraftbeaufschlagung zu Wirkunterbrechungen in dem Getriebe kommen. An einem Kraftumkehrpunkt, bei dem die vom Aktuator bewirkte Zusatzkraft auf etwa 0 N absinkt, kann eine Wirkrichtungsumkehr des Getriebes in den Getriebelosen hervorgerufen werden. Da die Getriebelose ein gewisses Spiel haben, kann hierdurch ein Schlagen ausgelöst werden, was in der Folge zu einer Geräuschentwicklung führen kann.

Es wird daher vorgeschlagen, während der gesamten Signalphase, in der der Aktuator das Fahrpedal in Schwingungen versetzen soll, den Aktuator derart anzusteuern, dass er das Fahrpedal mit einer Mindestkraft beaufschlagt. Insbesondere wird der Aktuator derart angesteuert, dass die erzeugte Kraft während der gesamten Signalphase in einer Richtung hin zu einer Ruhelage des Fahrpedals wirkt.

Mit anderen Worten soll der Aktuator während der gesamten Signalphase eine Kraft mit einer zwar zeitlich variierenden Stärke, die aber nie unter eine gewisse Mindeststärke absinkt, erzeugen, wobei die Kraft zumindest mit einer Teilrichtungskomponente hin zur Ruhelage des Fahrpedals und damit gegen eine vom Fahrer ausgeübte, das Fahrpedal betätigende Kraft wirken soll.

Die von dem Aktuator erzeugte Kraft kann dabei zusätzlich zu anderen, auf das Fahrpedal wirkenden Kräften wirken. Beispielsweise werden Fahrpedale typischerweise mit Hilfe von Pedal-Rückstellfedern hin zu ihrer Ruhelage, die sie einnehmen sollen, wenn sie nicht von einem Fahrer betätigt werden, vorgespannt. Die von der Pedal-Rückstellfeder erzeugte Kraft wirkt dabei unabhängig von einer von dem Aktuator erzeugten Betätigungskraft auf das Fahrpedal. Der Aktuator soll eine zusätzliche Rückstellkraft hin zu der Ruhelage des Fahrpedals bewirken, wobei diese Rückstellkraft zeitlich variieren kann, um auf diese Weise für den Fahrer haptisch wahrnehmbare Schwingungen in dem Fahrpedal zu erzeugen.

Solange in dem Fahrpedal kein haptisch wahrnehmbares Signal erzeugt werden soll, kann der Aktuator von dem Fahrpedal mechanisch entkoppelt sein, das heißt, das Fahrpedal nicht mechanisch kontaktieren. Beispielsweise kann der Aktuator in eine Ruheposition zurückgezogen sein. Sobald dem Fahrer durch ein haptisch wahrnehmbares Signal ein Hinweis oder eine Warnung signalisiert werden soll, das heißt, zu Beginn einer Signalphase, kann der Aktuator dann derart angesteuert werden, dass er aus der Ruheposition in eine Aktuationsposition, in der er das Fahrpedal mechanisch kontaktiert, gebracht wird. Erst sobald der Aktuator mit dem Fahrpedal in mechanischen Kontakt getreten ist, wird von dem Aktuator eine Kraft auf das Fahrpedal ausgeübt, wobei der Aktuator derart gesteuert bzw. geregelt wird, dass diese Betätigungskraft während der gesamten Signalphase ein vorbestimmtes Minimum nicht unterschreitet.

Am Ende der Signalphase kann der Aktuator derart angesteuert werden, dass er aus der Aktuationsposition wieder hin zu der Ruheposition gebracht wird. Somit kann der Aktuator nach der Signalphase vom Fahrpedal entkoppelt werden und in seiner Ruheposition, beispielsweise außerhalb des Fahrpedals, warten, bis eine nächste Signalphase begonnen werden soll. Der Aktuator benötigt während solcher Ruhephasen außerhalb der Signalphasen daher nur kurzzeitig Energie, um in die Ruhelage zu fahren, und kann dann dort ruhen, ohne dass weitere Energie benötigt würde. Außerdem wird sowohl beim im Wesentlichen kraftfreien Verfahren des Aktuators in seiner Ruheposition nach dem Entkoppeln von dem Fahrpedal als auch insbesondere während des Ruhens in der Ruheposition keine Belastung auf ein in dem Aktuator vorgesehenes Getriebe ausgeübt, wodurch Verschleißerscheinungen in dem Getriebe weiter reduziert werden können.

Die oben beschriebenen Ausführungsformen von erfindungsgemäßen Verfahren und die damit erreichbaren Funktionalitäten und Vorteile können durch ein in einem Fahrzeug vorgesehenes Steuergerät zum Steuern des haptischen Fahrpedals implementiert werden.

Das Steuergerät kann dabei dazu ausgelegt sein, über geeignete Schnittstellen Steuersignale an einen in dem Aktuator enthaltenen Antriebsmotor auszugeben. Außerdem kann das Steuergerät Schnittstellen aufweisen, um beispielsweise von geeigneten Sensoren Informationen über die aktuelle Position des Fahrpedals und/oder auf das Fahrpedal ausgeübte Kräfte empfangen zu können. Das Steuergerät kann das vorgeschlagene Steuerverfahren sowie etwaige Informationsauswertungen von Sensorsignalen in Hardware und/oder in Software implementieren. Es kann vorteilhaft sein, ein programmierbares Steuergerät für die Ausführung des oben beschriebenen Verfahrens zu programmieren. Hierzu kann ein Computerprogrammprodukt computerlesbare Anweisungen aufweisen, die das programmierbare Steuergerät dazu anweisen, die Schritte des jeweiligen Verfahrens durchzuführen. Das Computerprogrammprodukt kann auf einem computerlesbaren Medium wie beispielsweise einer CD, einer DVD, einem Flashspeicher, ROM, EPROM oder ähnlichem gespeichert sein. Um die von dem Aktuator zu bewirkende Kraft korrekt ansteuern zu können, kann neben der Verarbeitung weiterer Sensordaten auch in einer Datenbank oder in Form von Kennlinien gespeicherte Information über die von dem Aktuator bewirkte Kräftereaktion auf bestimmte Steuerungssignale herangezogen werden.

Es wird angemerkt, dass mögliche Merkmale und Vorteile von Ausführungsformen der Erfindung hierin teilweise mit Bezug auf ein erfindungsgemäßes Verfahren und teilweise mit Bezug auf ein erfindungsgemäßes Steuergerät beschrieben sind. Ein Fachmann wird erkennen, dass die einzelnen Merkmale in geeigneter Weise miteinander kombiniert oder ausgetauscht werden können, insbesondere von dem Steuergerät auf das Verfahren und umgekehrt übertragen werden können, um auf diese Weise zu weiteren Ausführungsformen und möglicherweise Synergieeffekten zu gelangen.

### Kurze Beschreibung der Zeichnungen

Nachfolgend werden Ausführungsformen der Erfindung mit Bezug auf die beigefügten Zeichnungen beschrieben. Weder die Beschreibung noch die Zeichnungen sollen dabei als die Erfindung einschränkend ausgelegt werden.
- Figur 1: zeigt ein Kraftfahrzeug mit einem Steuergerät zum Ausführen eines Verfahrens gemäß einer Ausführungsform der vorliegenden Erfindung.
- Figur 2 und 3: zeigen Graphen zur Veranschaulichung eines zeitlichen Kraftverlaufes eines durch einen Aktuator erzeugten haptischen Signals gemäß einer Ausführungsform der vorliegenden Erfindung.

Die Zeichnungen sind lediglich schematisch und nicht maßstabsgetreu.

### Ausführungsformen der Erfindung

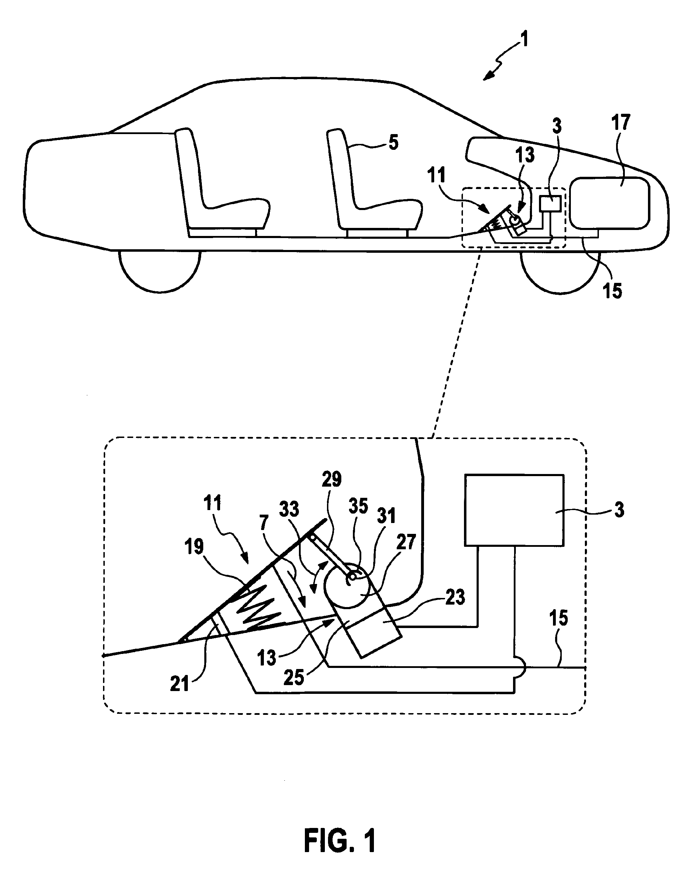

Figur 1 zeigt eine Schnittansicht eines Fahrzeugs 1 mit einem haptischen Fahrpedal 11. Durch Niederdrücken des Fahrpedals 11 kann ein auf einem Sitz 5 sitzender Fahrer einem Motor 17 des Fahrzeugs 1 über einen Seilzug 15 oder über eine mit einem Motorsteuergerät verbundene Leitung (nicht dargestellt) den Motor 17 zum Beschleunigen des Fahrzeugs 1 veranlassen. Der Fahrer muss hierzu das Fahrpedal 11 in Richtung des Pfeils 7 niederdrücken. Ein Positionssensor 21 kann dabei die aktuelle Position bzw. Lage des Fahrpedals 11 bestimmen. Eine Feder 19 spannt das Fahrpedal 11 entgegen der Betätigungsrichtung 7 hin zu einer Ruhelage vor.

Das Fahrpedal 11 ist als haptisches Fahrpedal ausgestaltet. Hierzu verfügt das Fahrpedal 11 über einen Aktuator 13, mit Hilfe dessen das Fahrpedal 11 in eine gewünschte Richtung entgegen der Betätigungsrichtung 7 bewegt bzw. in diese Richtung mit Kraft beaufschlagt werden kann. Der Aktuator 13 kann hierbei das Fahrpedal 11 zu Schwingungen beispielsweise in Form von Vibrationen oder Pulsationen anregen.

Der Aktuator 13 kann in vorteilhafter Weise mit einem einfachen Gleichstrommotor 23 betrieben werden, der über ein Getriebe 25 mit einer Betätigungsscheibe 27 gekoppelt ist. Durch Betätigen des Motors 23 kann die Betätigungsscheibe 27, wie durch den Pfeil 33 angedeutet, im oder gegen den Uhrzeigersinn verdreht werden. An der Betätigungsscheibe 27 ist in einem außerzentrischen Bereich ein Nocken 31 vorgesehen. Dieser Nocken 31 kann mit einem an dem Fahrpedal 11 vorgesehenen Stößel 29 zusammenwirken. Hierzu weist der Stößel 29 an seinem zu dem Aktuator 13 gerichteten Ende eine gabelförmige Aufnahme 35 auf, in die der Nocken 31 eingreifen kann, sobald die Betätigungsscheibe 27 in eine entsprechende Position gedreht wurde.

Der Aktuator 13 wird von einem Steuergerät 3 gesteuert. Das Steuergerät 3 erkennt, wenn einem Fahrer über das Fahrpedal 11 ein haptisch wahrnehmbares Signal übermittelt werden soll, um ihn beispielsweise auf eine Gefahrensituation hinzuweisen oder ihm die Möglichkeit einer Kraftstoff sparenden Fahrweise anzudeuten.

Solange kein haptisch wahrnehmbares Signal erzeugt werden soll, steuert das Steuergerät 3 den Aktuator 13 dazu an, in eine Ruheposition zu fahren und dort zu verweisen. Der Motor 23 wird hierzu kurzzeitig bestromt, um die Betätigungsscheibe 27 entsprechend zu verdrehen, das heißt, in Figur 1 im Uhrzeigersinn zu drehen, so dass der Nocken 31 in eine Position verfahren wird, wo er nicht mit dem Stößel 29 des Fahrpedals 11 in Kontakt steht. Vorzugsweise wird die Ruheposition so festgelegt, dass der Nocken 31 nicht mit dem Stößel 29 zusammenwirkt, egal welche Position aktuell von dem Fahrpedal 11 angenommen wird, das heißt, das Fahrpedal 11 kann über seinen gesamten Verfahrweg bewegt werden, ohne in Eingriff mit dem in der Ruheposition angeordneten Aktuator zu kommen.

Erst wenn ein haptisch wahrnehmbares Signal erzeugt werden soll, das heißt, am Beginn einer Signalphase, steuert das Steuergerät 3 den Motor 23 entsprechend an, um die Betätigungsscheibe 27 zu verdrehen und den Nocken 31 in mechanischen Kontakt mit dem Stößel 29 zu verfahren. Das Steuergerät 3 kann hierbei die von dem Sensor 21 gelieferte Information über die aktuelle Position des Fahrpedals 11 nutzen, um den Aktuator 13 gezielt anzusteuern, um die Betätigungsscheibe 27 an die entsprechende Position zu verdrehen, sodass der Nocken 31 in die gabelförmige Aufnahme 35 eingreift.

Sobald der Aktuator 13 auf diese Weise in mechanischen Kontakt mit dem Fahrpedal 11 gebracht wurde, kann die Erzeugung des haptisch wahrnehmbaren Signals beginnen. Hierzu wird die von dem Steuergerät 3 an den Motor 23 angelegte Steuerspannung derart zeitlich variiert, dass die von dem Motor 23 über das Getriebe 25 und die Betätigungsscheibe 27 letztendlich auf den Stößel 29 und damit auf das Fahrpedal 11 ausgeübte Kraft zeitlich variiert und so das Fahrpedal in Schwingungen versetzt.

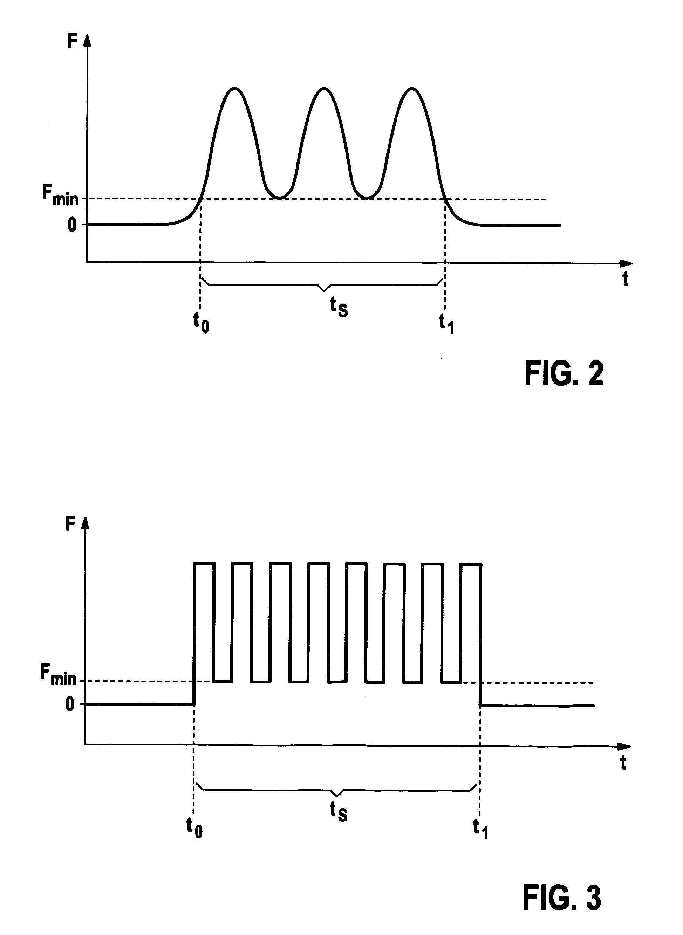

In den Figuren 2 und 3 ist veranschaulicht, wie sich die Betätigungskraft F während einer Signalphase tₛ zeitlich verändert

In Figur 2 ist dabei ein sinusartiger Verlauf der Betätigungskraft F dargestellt. Die Frequenz der zeitlichen Kraftänderung ist hierbei verhältnismäßig niedrig, so dass die einzelnen Kraftpulse von einem Fahrer separat wahrgenommen werden können und somit beispielsweise durch die Anzahl oder Dauer der Kraftpulse bestimmte, vom Fahrer unterscheidbare Signale übermittelt werden können.

In Figur 3 ist ein rechteckiger Verlauf der Betätigungskraft F dargestellt. Die einzelnen Kraftpulse sind hierbei verhältnismäßig kurz, so dass ein Fahrer ein Vibrieren in dem Fahrpedal spüren wird.

Bei den in den Figuren 2 und 3 dargestellten Kraftverläufen sinkt eine von dem Aktuator bewirkte Kraft F nach dem Beginn t₀ der Signalphase tₛ bis zu deren Ende t₁ nicht unter ein gewisses Mindestkraftniveau Fₘᵢₙ. Mit anderen Worten wird nach einem ersten Puls bzw. nach einer ersten Schwingung im zeitlichen Zwischenraum bis zum nächsten Puls bzw. zur nächsten Schwingung ein gewisses Kraft-Grundniveau von beispielsweise 5 N von dem Aktuator auf das Fahrpedal aufrechterhalten.

Auf diese Weise kann ein Antriebsverbund des Aktuators 13, der beispielsweise sowohl einen Gleichstrommotor 23 als auch ein mit diesem gekoppeltes Getriebe 25 umfassen kann, in eine gewünschte Wirkrichtung vorgespannt werden, um so ein optimiertes haptisches Gefühl am Fuß des Fahrers bewirken zu können. Ergänzend wird hierdurch eine Geräuschentwicklung beispielsweise aufgrund eines Getriebeklapperns innerhalb der Getriebelosen verhindert.

Nach Beendigung des letzten Pulses, das heißt am Ende t₁ der Signalphase tₛ, sinkt das vom Aktuator bewirkte Kraftniveau wieder auf 0 N ab, wobei sich der Aktuator von dem Fahrpedal lösen und in eine Ruheposition fahren kann.

## Patentansprüche

1. Verfahren zum Steuern eines haptischen Fahrpedals (11), bei dem das Fahrpedal (11) während einer Signalphase (tₛ) mittels einer von einem Aktuator (13) erzeugten variierenden Betätigungskraft (F) in Schwingungen versetzt wird,
**dadurch gekennzeichnet, dass**
der Aktuator (13) dazu angesteuert wird, das Fahrpedal (11) während der gesamten Signalphase (tₛ) wenigstens mit einer Mindestkraft (Fₘᵢₙ) zu beaufschlagen.

2. Verfahren nach Anspruch 1, wobei die Mindestkraft (Fₘᵢₙ) mindestens 1 Newton beträgt.

3. Verfahren nach Anspruch 1 oder 2, wobei die Mindestkraft (Fₘᵢₙ) zwischen 1 und 30% der durchschnittlich von den Aktuator (13) während der Signalphase (tₛ) erzeugten Kraft (F) beträgt.

4. Verfahren nach einem der Ansprüche 1 bis 3, wobei der Aktuator (13) derart angesteuert wird, das die erzeugte Kraft (F) während der gesamten Signalphase (tₛ) in einer Richtung hin zu einer Ruhelage des Fahrpedals (11) wirkt.

5. Verfahren nach einem der Ansprüche 1 bis 4, wobei der Aktuator (13) derart angesteuert wird, dass er zu Beginn (t₀) der Signalphase (tₛ) aus einer Ruheposition, in der er das Fahrpedal (11) nicht mechanisch kontaktiert, hin zu einer Aktuationsposition, in der er das Fahrpedal (11) mechanisch kontaktiert, gebracht wird.

6. Verfahren nach einem der Ansprüche 1 bis 5, wobei der Aktuator (13) derart angesteuert wird, dass er am Ende (t₁) der Signalphase (tₛ) aus einer Aktuationsposition, in der er das Fahrpedal (11) mechanisch kontaktiert, hin zu einer Ruheposition, in der er das Fahrpedal (11) nicht mechanisch kontaktiert, gebracht wird.

7. Steuergerät (3) zum Steuern eines haptischen Fahrpedals (11) in einem Kraftfahrzeug (1), wobei das Steuergerät (3) dazu ausgelegt ist, ein Verfahren gemäß einem der Ansprüche 1 bis 6 durchzuführen.

8. Computerprogrammprodukt, welches computerlesbare Anweisungen aufweist, die ein programmierbares Steuergerät (3) dazu anweisen, ein Verfahren gemäß einem der Ansprüche 1 bis 6 durchzuführen.

9. Computerlesbares Medium mit einem darauf gespeicherten Computerprogrammprodukt gemäß Anspruch 8.

## Claims

1. Method for controlling a haptic acceleration pedal (11), in which the acceleration pedal (11) is set in oscillation during a signal phase (tₛ) by means of a varying activation force (F) which is generated by an actuator (13),
**characterized in that**
the actuator (13) is actuated so that at least a minimum force (Fₘᵢₙ) is applied to the acceleration pedal (11) during the entire signal phase (tₛ).

2. Method according to Claim 1, wherein the minimum force (Fₘᵢₙ) is at least 1 Newton.

3. Method according to Claim 1 or 2, wherein the minimum force (Fₘᵢₙ) is between 1% and 30% of the force (F) generated on average by the actuator (13) during the signal phase (tₛ).

4. Method according to one of Claims 1 to 3, wherein the actuator (13) is actuated in such a way that the force (F) generated during the entire signal phase (tₛ) acts in a direction towards a position of rest of the acceleration pedal (11).

5. Method according to one of Claims 1 to 4, wherein the actuator (13) is actuated in such a way that at the start (t₀) of the signal phase (tₛ) it is moved from a position of rest, in which it is not in mechanical contact with the acceleration pedal (11), towards an actuation position, in which it is in mechanical contact with the acceleration pedal (11).

6. Method according to one of Claims 1 to 5, wherein the actuator (13) is actuated in such a way that at the end (t₁) of the signal phase (tₛ) it is moved from an actuation position, in which it is in mechanical contact with the acceleration pedal (11), towards a position of rest, in which it is not in mechanical contact with the acceleration pedal (11).

7. Control unit (3) for controlling a haptic acceleration pedal (11) in a motor vehicle (1), wherein the control unit (3) is configured to carry out a method according to one of Claims 1 to 6.

8. Computer program product which has computer-readable instructions which instruct a programmable control unit (3) to carry out a method according to one of Claims 1 to 6.

9. Computer-readable medium having a computer program product according to Claim 8 stored thereon.

## Revendications

1. Procédé de commande d'une pédale d'accélérateur haptique (11), selon lequel la pédale d'accélérateur (11) est amenée en oscillation pendant une phase de signalisation (tₛ) au moyen d'une force d'actionnement (F) variable générée par un actionneur (13),
**caractérisé en ce que**
l'actionneur (13) est commandé pour charger la pédale d'accélérateur (11) au moins avec une force minimale (Fₘᵢₙ) pendant la totalité de la phase de signalisation (tₛ).

2. Procédé selon la revendication 1, selon lequel la force minimale (Fₘᵢₙ) est au moins égale à 1 Newton.

3. Procédé selon la revendication 1 ou 2, selon lequel la force minimale (Fₘᵢₙ) est comprise entre 1 et 30 % de la force (F) moyenne générée par l'actionneur (13) pendant la phase de signalisation (tₛ).

4. Procédé selon l'une des revendications 1 à 3, selon lequel l'actionneur (13) est commandé de telle sorte que la force (F) générée pendant la totalité de la phase de signalisation (tₛ) agit dans une direction vers une position de repos de la pédale d'accélérateur (11).

5. Procédé selon l'une des revendications 1 à 4, selon lequel l'actionneur (13) est commandé de telle sorte qu'au début (t₀) de la phase de signalisation (tₛ), il est amené d'une position de repos, dans laquelle il n'est pas en contact mécanique avec la pédale d'accélérateur (11), vers une position d'actionnement, dans laquelle il est en contact mécanique avec la pédale d'accélérateur (11).

6. Procédé selon l'une des revendications 1 à 5, selon lequel l'actionneur (13) est commandé de telle sorte qu'à la fin (t₁) de la phase de signalisation (tₛ), il est amené d'une position d'actionnement, dans laquelle il est en contact mécanique avec la pédale d'accélérateur (11), vers une position de repos, dans laquelle il n'est pas en contact mécanique avec la pédale d'accélérateur (11).

7. Contrôleur (3) destiné à commander une pédale d'accélérateur haptique (11) dans un véhicule automobile (1), le contrôleur (3) étant conçu pour mettre en oeuvre un procédé selon l'une des revendications 1 à 6.

8. Produit de programme informatique, lequel possède des instructions lisibles par ordinateur qui donnent l'ordre à un contrôleur (3) programmable de mettre en oeuvre un procédé selon l'une des revendications 1 à 6.

9. Support lisible par ordinateur sur lequel est enregistré un produit de programme informatique selon la revendication 8.
